# EUROPÄISCHE PATENTSCHRIFT

(11) **EP 2 813 740 B1**
(45) Veröffentlichungstag und Bekanntmachung des Hinweises auf die Patenterteilung: **11.05.2022**
(21) Anmeldenummer: 14001070.3
(22) Anmeldetag: 22.03.2014
(51) Int. Cl.: F16L 27/08, B23Q 11/10, F16L 27/12

(54) **VORRICHTUNG ZUM TRANSPORT VON MEDIEN**
Device for transporting media
Dispositif de transport de fluides

(30) Priorität: 11.06.2013 DE 102013009759
(43) Veröffentlichungstag der Anmeldung: 17.12.2014
(73) Patentinhaber: Christian Maier GmbH & Co. KG Maschinenfabrik, 89520 Heidenheim (DE)
(72) Erfinder: Weinmann, Manfred, 89428 Syrgenstein (DE)
(74) Vertreter: Dr. Weitzel & Partner

(56) Entgegenhaltungen:
- EP-A2- 1 069 362
- EP-A2- 2 362 122
- DE-A1- 3 810 060
- DE-C1- 19 757 882
- JP-A- H08 210 573
- JP-A- H08 243 877
- JP-A- 2005 249 007
- None

## Beschreibung

Die Erfindung betrifft eine Vorrichtung zum Transport von Medien zwischen einem feststehenden Bauteil und einem rotierenden Bauteil, insbesondere Dichtkopf zur Durchleitung von Medien unter Druck und erhöhter Temperatur, mit wenigstens einer von dem Medium durchströmten, von einem Gleitring und einem gegen diesen abdichtenden Gegenring gebildeten Gleitringdichtung zwischen dem feststehenden und dem rotierenden Bauteil.

Gleitringdichtungen bestehen aus zwei aufeinander gleitenden Teilen, nämlich dem Gleitring und dem Gegenring. Der Gegenring sitzt abgedichtet und axial fest verbunden in dem einen Bauteil, während der Gleitring axial frei beweglich und gegen Verdrehen gesichert eingebaut wird. Die Abdichtung von Gleit- und Gegenring gegenüber den angrenzenden Bauteilen übernehmen sogenannte Nebendichtungen - vorzugsweise als O-Ringe ausgeführt. Um den Gleitring axial bewegen zu können, muss die Dichtungsreibkraft der Nebendichtung überwunden werden. Damit auch im drucklosen Zustand die Dichtung geschlossen bleibt, drücken üblicherweise Federn den Gleitring und Gegenring aneinander. Die Federanpresskraft soll einfachheitshalber bei den folgenden Ausführungen unberücksichtigt bleiben. Bei Beaufschlagung der Dichtung mit dem Medium gelangt dieses durch den Druck in den Dichtspalt.

Der Druck im Dichtspalt wird von der Druckkammer zur drucklosen Seite hin abgebaut. Durch diesen Druckabbau innerhalb bzw. entlang der Dichtfläche entsteht eine den Dichtspalt öffnende Kraftkomponente, welche die Dichtflächen voneinander abheben will. Um das Öffnen des Dichtspaltes zu verhindern, wirkt eine hydraulisch belastende Ringfläche am Gleitring als den Dichtspalt schließende Kraftkomponente dagegen. Das Verhältnis der den Spalt schließenden zu der den Spalt öffnenden Kraftkomponenten nennt man Belastungsverhältnis "K". Werkstoffspezifische Eigenschaften der Dichtungsmaterialien und der K-Wert sind maßgeblich für die Dichtungseigenschaften und Lebensdauer einer Gleitringdichtung verantwortlich.

Wird eine Gleitringdichtung mit einem bestimmten Medium und festen Einsatzbedingungen wie Druck, Temperatur und Drehzahl betrieben, wird der K-Wert den Anwendungen entsprechend ausgelegt. Für geringe Drücke und niedrige Drehzahlen werden oft Belastungsverhältnisse größer 1 verwendet; hier spricht man von belasteten Gleitringdichtungen. Bei höheren Drücken und steigenden Drehzahlen werden meist entlastete Gleitringdichtungen mit einem Belastungsverhältnis < 1 (üblicherweise 0,65 bis 0,85) eingesetzt. Eine entlastete Gleitringdichtung erhöht den Flüssigkeitsanteil im Dichtspalt, kühlt und schmiert die aufeinander reibenden Dichtflächen somit besser und sorgt dadurch für eine entsprechend höhere Lebensdauer der Dichtung.

Werden Gleitringdichtungen für unterschiedlichste Medien und Drücke eingesetzt, so ist es schwierig, eine optimale Auslegung für alle Anwendungsgebiete zu erreichen. Ein solches Einsatzgebiet unterschiedlicher Medien findet man beispielsweise bei der spanenden Bearbeitung an Werkzeugmaschinen. Dort werden über die drehende Spindel und das dort eingebaute Werkzeug Kühlschmierstoffe direkt an die Schneide transportiert. Die Überleitung des Mediums zur rotierenden Spindelwelle übernehmen Drehdurchführungen oder Dichtsätze. In diesen Bauteilen kommen überwiegend berührende Gleitringdichtungen zum Einsatz. Für die Kühlung der Schneide werden je nach Bearbeitungsgang Kühlschmierstoffe, Multifunktionsöle, trockene Druckluft und ÖL-Luft Aerosole verwendet. Aber auch Bearbeitungen ohne Medium sind keine Seltenheit. Die größte Problematik besteht in der Regel bei der Bearbeitung mit Druckluft, also ohne Kühl- und Schmiermedium, da hier der Schmierstoff im Dichtspalt fehlt. Dadurch wird die Dichtung heiß, verschleißt relativ schnell, und versagt aufgrund der Überhitzung oft komplett. Um dem entgegen zu wirken, gibt es unterschiedliche Lösungen am Markt.

Bei einer aus der Praxis bekannten Lösung wird, abhängig von Druck und Art des Mediums, zwischen kontrollierter Leckage und geschlossenen Dichtflächen gewechselt. Dies hat jedoch den Nachteil, dass es bei einer Zufuhr der Medien bei geöffneten Dichtflächen zu hohen Leckagewerten und unerwünschten Energieverlusten kommt. Weiterhin können hierbei Schmutzpartikel zwischen die abgehobenen Dichtflächen gelangen, die bei einem späteren Gleitkontakt der Dichtungen deren geläppte Flächen beschädigen können.

Aus der Patentschrift EP 1 567 798 B1 ist eine Lösung bekannt, bei der eine thermisch schaltende Kupplung eine kraftschlüssige Verbindung von einem Dichtungsring zu einem Dehnelement herstellt. Bei Erwärmung des Dehnelements wird über eine Kupplung die Längenänderung weitergeleitet, um dadurch die Anpresskraft der Dichtungsringe zu reduzieren, ohne die Dichtung zu öffnen.

Bei der aus der JP-A-2010-101361 bekannten Lösung werden die Dichtflächen nicht unmittelbar durchströmt (im Durchgang zwischen der Dichtung ist ein Rohr eingebaut, durch das das Medium fließt), wobei ein Belastungsverhältnis für die Gleitringdichtung kleiner gleich 0,6 gewählt wird. Es stellt sich dann angeblich eine kontrollierte Leckage ein.

In der JP-A-2008-261405 wurde eine Idee vorgeschlagen, wonach für zwei Medien unterschiedliche Belastungsverhältnisse an der Dichtung realisiert werden. Für Druckluft wird hierbei ein kleiner K-Wert und für ein schmierendes Medium ein größerer K-Wert vorgesehen. Erreicht wird dies durch das Verschieben eines Kolbens mit Bohrung, wodurch unterschiedliche Ringflächen freigegeben oder verschlossen werden. Der Steuerkolben wird über einen externen Druckanschluss bewegt.

Eine ähnliche Lösung wird in der JP-A-2008-64274 vorgeschlagen. Zu der belastenden Ringfläche für die Schließkraft wird zusätzlich eine entlastende Ringfläche geschaffen, welche zum durchströmenden Medium und der Atmosphäre über Nebendichtungen abgedichtet wird. Über einen externen Steuerdruck kann die durch die konstruktive Auslegung bedingte, festgelegte Pressung in der Dichtfläche in Abhängigkeit von unterschiedlichen Medien und Betriebsarten entsprechend reduziert werden.

Aus der DE 197 57 882 C1 ist eine Drehdurchführung mit geringem Druckabfall bekannt, die für unter geringem Druck stehende Medien geeignet sein soll. Die Drehdurchführung weist ein Ventil auf, das auch bei dem geringen Druck sicher schließen können soll. Dazu ist ein vorgespannter Ventilkolben vorgesehen, der in Öffnungsrichtung mit Druck beaufschlagbar ist.

Die EP 1 069 362 A2 beschreibt eine Drehdurchführung für die Durchleitung wechselnder, nämlich schmierender und nicht-schmierender Medien, wozu die Gleitdichtflächen in axialer Richtung soweit auseinander bewegbar sind, dass sie nicht mehr miteinander in Kontakt kommen. Um trotz nicht-schmierender Medien nur geringe Leckverluste selbst bei hohen Drehzahlen zu erreichen, ist eine zusätzliche zylindrische Dichtung vorgesehen.

Aus der JP H08 210573 A ist eine rotierende Dichtungsverbindung einer Spindel oder dergleichen bekannt, bei der selbst bei hoher Geschwindigkeit kein Öl austreten soll. Dazu wird sie mit einem rotierenden Seitenelement eines rotierenden Dichtungselements über ein Druckelement in Kontakt gebracht, wobei das Einstellen und Beaufschlagen mit Druckkraft bei der Druckkraftsteuerung über ein Fluid oder dergleichen erfolgt.

Weiter ist aus der DE 38 10 060 A1 eine Drehdurchführung für Fluide bekannt, bei der eine Gleitringdichtung zwischen dem feststehenden und dem rotierenden, als Hohlwelle ausgebildeten Teil angeordnet ist. Die Hohlwelle ist durch ein Sperrventil schließbar. Damit auch bei gesperrtem Durchfluss das Fluid weiterhin zirkulieren und die Gleitringdichtung schmieren kann, mündet eine Anschlußbohrung in den Hohlraum, durch welche Fluid aus dem Hohlraum abfließen kann.

Die JP H08 243877 A beschreibt eine Dreheinheit, die ein Paar von Dichtungselementen eines Drehelements in Kontakt hält, selbst wenn Druckschwankungen in dem Bearbeitungsfluid auftreten und selbst wenn ein Unterdruck erzeugt wird. Dazu werden Betriebsfluid und Bearbeitungsfluid in getrennten Systemen geführt, wobei ein Paar Dichtungselemente gegen die elastische Kraft einer Membran in Kontakt zueinander gebracht werden. Eine Steuereinrichtung sorgt dafür, dass der Kontaktzustand der Dichtungselemente bis zum Ende des Zuführens des Bearbeitungsfluids aufrechterhalten wird.

Hiervon ausgehend liegt der Erfindung die Aufgabe zugrunde, eine Möglichkeit zu schaffen, das oben beschriebene Belastungsverhältnis einer Gleitringdichtung den Betriebsbedingungen entsprechend stufenlos anzupassen.

Diese Aufgabe wird nach der Erfindung dadurch gelöst, dass ein in axialer Richtung verstellbares Steuerelement vorgesehen ist, das in Abhängigkeit von den Umgebungs- und Betriebsbedingungen bzw. -parametern der Vorrichtung die axiale Position des Gleitrings und/oder des Gegenrings und damit den zwischen beiden wirkenden Anpressdruck einstellt, wobei das Steuerelement auf einer von dem Medium durchströmten Hülse angeordnet ist und das Steuerelement eine Stellhülse aufweist, an der der Gleitring oder der Gegenring stirnseitig fest angeschlossen ist, wobei weiter die Stellhülse mit ihrer dem Gleitring bzw. dem Gegenring abgewandten Stirnseite in einen vorzugsweise im feststehenden Bauteil angeordneten Ringraum vorsteht und der Ringraum über eine Zuleitung mit einem Druckmedium zur Steuerung der Stellhülse beaufschlagbar ist wobei das Druckmedium über ein eigenständiges Druckaggregat bereitgestellt oder aus dem durch die Vorrichtung durchzuleitenden Medium abgezweigt wird.

Der durch die Erfindung erreichte Fortschritt besteht zunächst darin, dass hierdurch höhere Lebensdauern der Gleitringdichtung unter verschiedensten Betriebsbedingungen erreicht werden können. Zusätzlich werden dadurch unnötige Leckagen und hieraus entstehende Energieverluste vermieden, was zu einer wesentlich gesteigerten Ökobilanz führt. Die Dichtflächen bleiben in allen Betriebszuständen geschlossen, wodurch die Gefahr des Eindringens von abrasiven Partikeln zwischen die Dichtflächen, welche die geläppten Flächen beschädigen können, verringert wird. Eine solche Gleitringdichtung kann mit unterschiedlichen Medien beaufschlagt werden, ohne dass die eingangs beschriebenen Nachteile auftreten.

Erreicht werden diese Vorteile dadurch, dass die für das Schließen des Dichtspalts verantwortliche hydraulische Kraft nicht mehr unmittelbar vom abzudichtenden Mediumsdruck erzeugt wird, sondern über einen extern bereitzustellenden, regelbaren Steuerdruck. Der Mediendruck erzeugt nur noch die den Dichtspalt öffnende Komponente der Gleitringdichtung. Die den Dichtspalt schließende Kraft am Gleitring wird nur noch extern über eine Steuerung entsprechend den Umgebungs- und Betriebsbedingungen eingestellt.

Alternativ ist auch eine Kombination aus der hier beschriebenen Lösung mit regelbarem Anpressdruck zwischen Gleit- und Gegenring mit einer konventionellen axialen Gleitringdichtung denkbar, bei der die den Dichtspalt schließende Kraftkomponente streng vom abzudichtenden Mediendruck abhängt.

In beiden Fällen besteht die bevorzugte Ausführungsform der Erfindung darin, dass die Hülse gegenüber dem es umgebenden Bauteil einerseits und dem Steuerelement andererseits abgedichtet ist. Hierdurch wird eine gute Entkoppelung vom Mediendruck erreicht.

Um eine optimale Anpassung an die Betriebsbedingungen zu erreichen, empfiehlt es sich, dass zur Steuerung des Anpressdrucks durch das Steuerelement im Bereich des Gleitrings und/oder des Gegenrings ein Temperaturfühler zur Erfassung der Dichtungstemperatur vorgesehen ist. Nimmt die Temperatur an der Dichtung einen Wert ein, welcher die Dichtflächen beschädigen könnte, wird die Anpresskraft zurückgenommen und der Verschleiß an den Reibflächen sinkt. Gleichzeitig wird die thermische Belastung aller angrenzenden Bauteile, wie z. B. von Lagern reduziert.

Entsprechend ist es zusätzlich von Vorteil, wenn zur Steuerung des Anpressdrucks durch das Steuerelement ein Leckagesensor vorgesehen ist. Dieser Sensor kann in der Nähe des Dichtspaltes bzw. am Anschluss zur Leckageentsorgung eingebaut sein und ermittelt die momentan anfallende Leckage. Die Spaltbelastung wird dann im Zusammenspiel mit der Gleitringtemperatur und der anfallenden Leckage gesteuert; sie kann aber auch ohne Berücksichtigung der Leckage erfolgen.

Im übrigen hat es sich auch als vorteilhaft erwiesen, wenn zur Sicherstellung einer Grundvorspannung des Steuerelements ein Federelement vorgesehen ist, das auch dann bereits wirksam ist, wenn das eigentliche Druckmedium noch nicht wirksam ist. Die Verwendung einer Feder zur Erzeugung eines Grundanpressdruckes kann optional erfolgen; ebenso kann ein Grunddruck an der Ringfläche die Funktion der Feder übernehmen.

Somit können Probleme an der Dichtung unmittelbar erfasst und durch geeignete Vorgehensweisen entsprechend korrigiert werden. Die erfassten Betriebszustände der Dichtung können an die Maschinensteuerung weitergeleitet werden, wobei zu den wesentlichen Betriebszuständen der Dichtung in erster Linie die Betriebstemperatur an den Dichtflächen gehört.

Als Energieversorgung für den Belastungsdruck kann eine vorhandene Steuerhydraulik oder andererseits der eigentliche Mediendruck in der Durchführung verwendet werden. Der Steuerdruck wird über ein Proportionaldruckregelventil eingestellt. Dabei sind unterschiedliche Schaltungsbeispiele bei verschiedenen Medien denkbar.

Im folgenden wird die Erfindung an in der Zeichnung dargestellten Ausführungsbeispielen näher erläutert; es zeigen:
- Fig. 1: die Vorrichtung nach der Erfindung zum Einbau in eine Werkzeugmaschine,
- Fig. 2: den Gegenstand nach Fig. 1 bei gelöstem Werkzeug,
- Fig. 3: eine Draufsicht auf den Gleitring der Vorrichtung,
- Fig. 4: den Gegenstand nach Fig. 1 mit einer schematisch wiedergegebenen Anordnung zur Ansteuerung,
- Fig. 5: eine alternative Ausführungsform zur Fig. 4,
- Fig. 6: eine konventionelle axiale Gleitringdichtung kombiniert mit der erfindungsgemäßen Lösung mit regelbarem Anpressdruck zwischen Gleit- und Gegenring in der Fig. 2 entsprechender Darstellung.

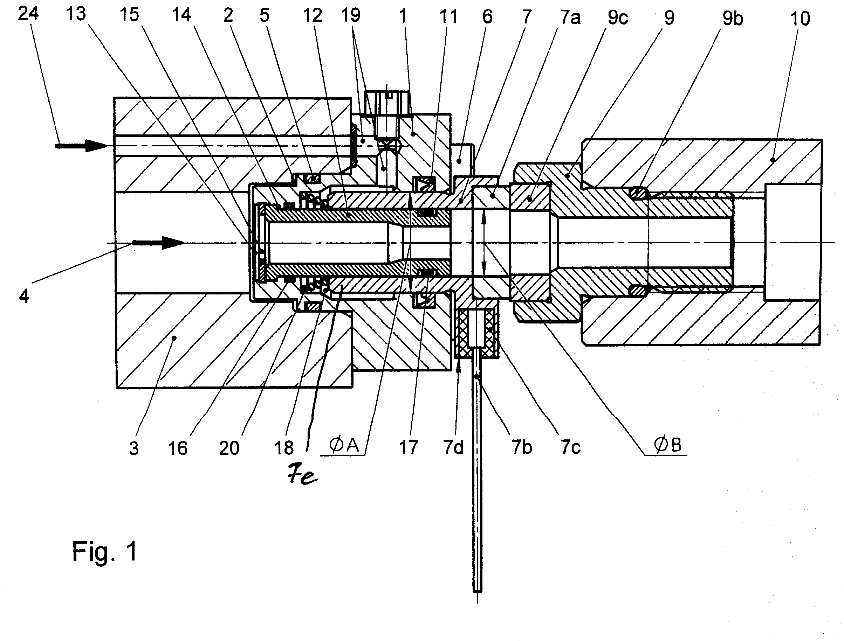

Die in der Zeichnung, insbesondere in Fig. 1 dargestellte Vorrichtung dient zum Transport von Medien zwischen einem feststehenden Bauteil und einem rotierenden Bauteil. Dies kann insbesondere ein Dichtkopf zur Durchleitung von Medien unter Druck und erhöhter Temperatur sein, der das Zuführen eines gasförmigen oder flüssigen Kühl- und/oder Schmiermediums 4 von einem stehenden Bauteil 3 zu einer rotierenden Spindel 10 ermöglicht.

Dazu ist wenigstens eine von dem Medium 4 durchströmte, von einem Gleitring 7 und einem gegen diesen abdichtenden Gegenring 9 gebildete Gleitringdichtung vorgesehen, die zwischen dem feststehenden und dem rotierenden Bauteil angeordnet ist. In axialer Richtung ist ein verstellbares Steuerelement 7e vorgesehen, das in Abhängigkeit von den Umgebungs- und Betriebsbedingungen bzw. -parametern der Vorrichtung die axiale Position des Gleitrings 7 und/oder des Gegenrings 9 und damit den zwischen beiden wirkenden Anpressdruck einstellt. Das Steuerelement 7e ist dabei auf einer von dem Medium durchströmten Hülse 12 angeordnet.

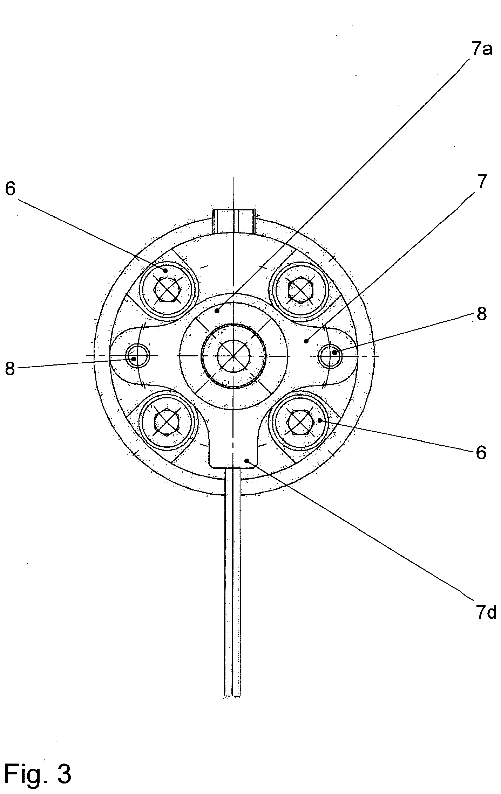

Im einzelnen wird das Gehäuse 1 der Vorrichtung in einer Aufnahmeöffnung 2 einer Werkzeugmaschinenspindel 3 zentriert und mit einer Schraubverbindung 6 fixiert, wie dies auch aus Fig. 3 hervorgeht. Die Zufuhr des Kühl- und Schmiermediums 4 erfolgt durch eine Anschlussöffnung der Aufnahmeeinrichtung. Die Abdichtung der Gehäuse zueinander übernimmt eine in die Vorrichtung integrierte Dichtung 5.

In das Gehäuse wird ein axial beweglicher Zylinder mit einer Bohrung für den Mediendurchfluss, der sogenannte Gleitring 7, koaxial eingeschoben. Der aus der Zentrieröffnung hervorstehende Teil des Gleitringes fasst den eigentlichen Dichtungsring 7a (eine Draufsicht auf den Gleitring ergibt sich aus Figur 3). Der Dichtungsring 7a kann aus unterschiedlichen geeigneten Dichtungsmaterialien wie z.B. Silizium, Kohle oder beschichteten Werkstoffen hergestellt sein und ist entweder in den Gleitring 7 eingeschrumpft oder eingeklebt.

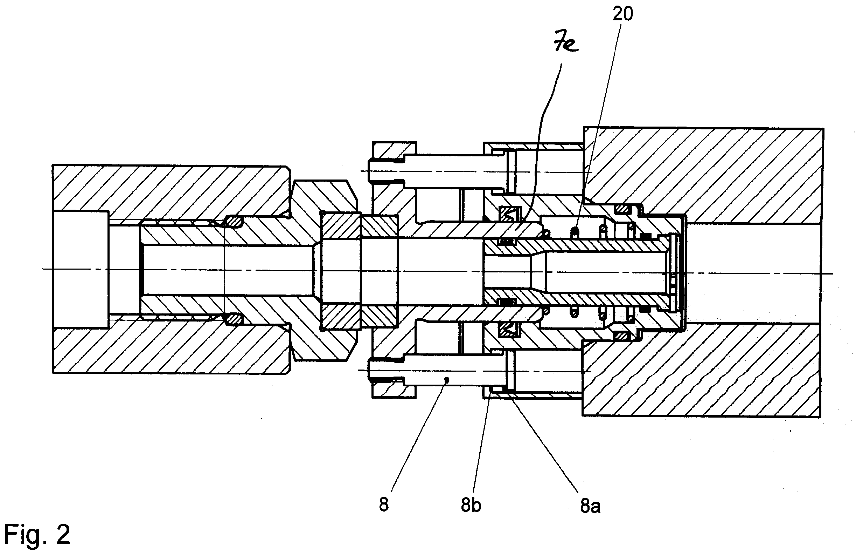

Wie in Figur 2 ersichtlich, sind in den Gleitring 7 zwei Stiftschrauben 8 eingeschraubt, welche mit Spiel in eine zylindrische Öffnung im Gehäuse aufgenommen sind, die als Drehmomentabstützung dienen. Der Bund 8a der Stiftschraube begrenzt an der Bohrungsverengung des Gehäuses 8b den axialen Hub des Gleitringes 7. Sie dient zur Ausrücksicherung des Gleitringes 7, damit sich dieser nicht unkontrolliert aus den Führungen und Abdichtungen bewegen kann. Am Gleitring befindet sich radial im Bereich des Dichtungsringes eine Bohrung 7d (siehe auch Figur 3). In diese ist ein Temperaturfühler 7b mit einem wärmeleitenden Gießharz 7c eingegossen. An den Gleitring 7 schließt sich der Gegenring 9 an. Dieser ist im Ausführungsbeispiel in eine rotierende Motorspindel 10 eingeschraubt und über zentrische Anordnung koaxial zum Gleitringgehäuse ausgerichtet.

Der Gegenring ist ähnlich aufgebaut wie der Gleitring. Er besitzt im Innern zum Durchströmen des Mediums eine rohrförmige Öffnung. Eine Dichtung 9b verhindert das Ausströmen von Schmierstoff über die Verbindung Spindel zu Gegenring in den drucklosen Raum. Die eigentliche Dichtungsfläche wird über eine dicht eingebettete Ringscheibe 9c gebildet. Die Ringscheibe 9c des Gleitringes liegt ständig mit seiner Stirnfläche am Dichtungsring 7a an. Die Abdichtung des Gleitringes 7 im Gehäuse 1 erfolgt durch eine spezielle reibungsarme Dichtung 11.

In der Bohrung des Gleitringes 7 ist in die Öffnung des Gleitringgehäuses 13 in Strömungsrichtung eine zylindrische Hülse 12 eingesteckt. Diese Hülse 12 ist axial fixiert, hier im Ausführungsbeispiel durch einen Bund 14 und einen Sicherungsring 15. Die Abdichtung der Hülse 12 zum Gehäuse 1 erfolgt durch eine ringförmige Dichtung 16, die Abdichtung zum Gleitring 7 wird durch die Dichtung 17 realisiert. Durch diese konstruktive Maßnahme wird ein abgedichteter ringförmiger Raum 18 geschaffen. Darin wird die hydraulisch wirksame Kolbenfläche für die den Dichtspalt schließende Kraftkomponente des Gleitringes 7 gebildet, und zwar über die Durchmesser A und B gemäß Fig. 1, ohne dass eine Beeinflussung durch den eigentlichen Mediumdruck 4 erfolgt. Diese Druckkammer ist über radiale und axiale Bohrungen 19 mit dem Steueranschluß 24 der Anordnung verbunden. Es besteht alternativ auch die Möglichkeit die Verbindung zur Steuerung über einen radialen Systemanschluss am Gehäuse 1 zu realisieren.

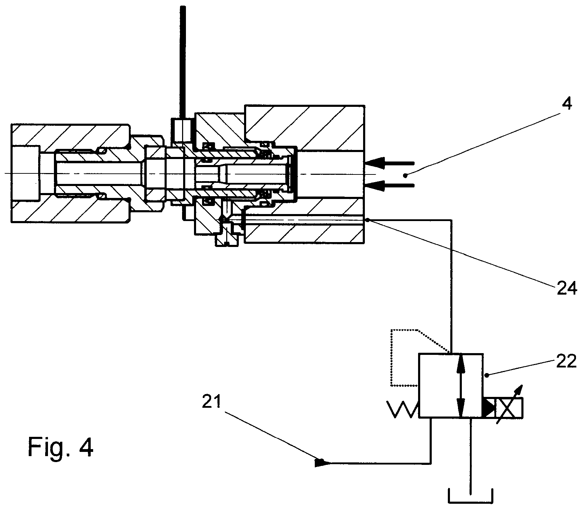

Die Speisung dieser Steuerleitung kann durch unterschiedliche Quellen erfolgen:
Bei dem Ausführungsbeispiel gemäß Figur 4 ist von der bestehenden Hydraulik einer Werkzeugmaschine eine Druckleitung 21 über ein Proportionaldruckregelventil 22 mit dem Steueranschluss 24 der Vorrichtung verbunden. Im Normalfall entspricht der Steuerdruck dem Druck des Kühlmediums, bei 80 bar Schmierstoffdruck wird also durch die Steuerung am Proportionalventil 80 bar Steuerdruck eingestellt. Steigt die Temperatur an der Dichtfläche des Gleitringes 7 über einen vorgeschriebenen Wert, z.B. weil die Kühl- und Schmierwirkung des verwendeten Mediums im Dichtspalt nicht ausreicht, wird der Druck stufenweise reduziert. Die Anpresskraft des Gleitringes 7 wird reduziert, es kann mehr Schmierstoff in den Dichtspalt gelangen und die Temperatur fällt. Die Belastung und der Verschleiß an der Gleitringdichtung sinken.

Bei Dichtsätzen, welche mit einer quantitativen Erfassung der Leckage (die in der Schlauchleitung oder im Gehäuse 1 integriert sein kann) ausgestattet sind, kann der Istwert der Leckage zusätzlich für die Festlegung des Anpressdruckes verwendet werden. Bei zu hoher Leckage wird dann der Schließdruck nach oben korrigiert. Als Korrekturwert kann auch die Gleitringtemperatur verwendet werden. Bei zu niedriger Gleitringtemperatur wird, in Abhängigkeit von Art und Druck des Mediums, die Anpresskraft wie bei zu hoher Leckage erhöht. Die Steuerung der Gleitringdichtung erfolgt entweder direkt in der Maschinensteuerung oder durch eine externe Steuerungseinheit. Da die Ausführungsdetails der elektronischen Steuerung nicht Bestandteil dieser Erfindung sind, werden diese auch nicht ausführlich beschrieben.

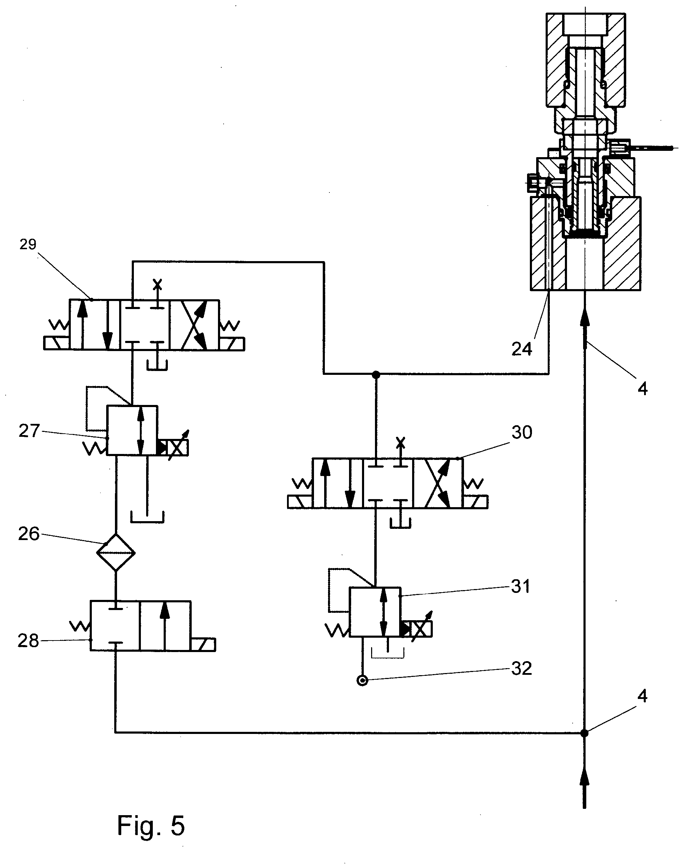

Das Ausführungsbeispiel gemäß Figur 5 geht davon aus, dass für die Steuerung des Anpressdruckes keine externe Hydraulikversorgung zur Verfügung steht. Dann wird das zuzuführende Kühlmedium 4 zur Versorgung verwendet. Dazu werden flüssige Kühlschmierstoffe durch einen Filter 26 über ein Proportionaldruckregelventil 27 an die Steuerleitung geleitet. Die elektronische Steuerfunktion arbeitet wie bei dem oben beschriebenen Beispiel mit externer Hydraulikölversorgung. Der Steueröldruck wird über die Wegeventile 28 und 29 zugeführt, getrennt oder abgebaut.

Bei Druckluft oder gasförmigen Medien wird über ein Wegeventil 30 diese Energiequelle 32 als Steuerungsfluid über ein Druckregelventil 31 zum Steueranschluss 24 geführt.

In Figur 2 ist der Zustand der Vorrichtung zum Werkzeugwechsel bei gelöstem Werkzeug dargestellt. Dabei bewegt sich der Gegenring in axialer Richtung, damit die Spannzange gelöst und der Werkzeughalter entnommen werden kann. Um zu verhindern, dass Schmutzpartikel zwischen die Dichtflächen gelangen, sollten die Dichtungsringe stets geschlossen bleiben.

Dies kann bei der Erfindung durch zwei unterschiedliche Einrichtungen erfolgen:
Eine konische Spiralfeder 20 (in Figur 1 und 2 dargestellt) wird in den ringförmigen Raum 18 eingebaut. Diese Feder drückt den Gleitring permanent gegen den Gegenring. Diese Lösung wird heute bei den üblichen Gleitringdichtungen verwendet. Allerdings ist zu beachten, dass die Anpresskraft sich mit den Federwegen ändert.

Anstelle der Feder kann bei dieser Erfindung dem ringförmigen Raum über die Steuerleitung ein bestimmter Luftdruck zugeführt werden. Dies hat den Vorteil, dass der Druck dann einer konstanten Anpresskraft entspricht.

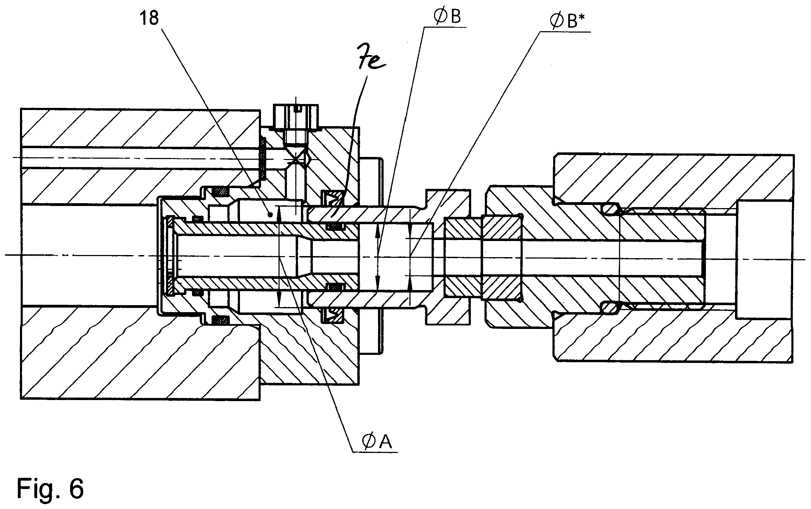

Eine mögliche Variante der in Figur 1 und 2 dargestellten neuen Lösungen ist in Figur 6 aufgezeigt. Zusätzlich zu der bereits beschriebenen Möglichkeit zur Generierung einer variablen Anpresskraft zwischen Gleit- und Gegenring erfolgt eine zusätzliche teilweise Belastung, resultierend durch den abzudichtenden Mediendruck, analog einer herkömmlichen axialen Gleitringdichtung. Wie aus Figur 6 hervorgeht, wird dies konstruktiv dadurch verwirklicht, dass der Durchmesser B an Dichtungsring 7a und Gleitring 7 nicht mehr identisch ist, sondern unterschiedliche Durchmesser B bzw. B* aufweisen.

## Patentansprüche

1. Vorrichtung zum Transport von Medien, bestehend aus einem feststehenden Bauteil und einem rotierenden Bauteil, insbesondere Dichtkopf zur Durchleitung von Medien (4) unter Druck und erhöhter Temperatur, mit wenigstens einer von dem Medium (4) durchströmten, von einem Gleitring (7) und einem gegen diesen abdichtenden Gegenring (9) gebildeten Gleitringdichtung zwischen dem feststenden und dem rotierenden Bauteil, mit weiter einem in axialer Richtung verstellbaren Steuerelement (7e) zur Einstellung der axialen Position des Gleitrings (7) und/oder des Gegenrings (9) und damit des zwischen beiden wirkenden Anpressdrucks in Abhängigkeit von den Umgebungs- und Betriebsbedingungen bzw. -parametern der Vorrichtung, weiter mit einer von dem Medium (4) durchströmten Hülse (12), auf der das Steuerelement (7e) angeordnet ist, wobei das Steuerelement (7e) eine Stellhülse aufweist, an der der Gleitring (7) oder der Gegenring (9) stirnseitig fest angeschlossen und die Hülse (12) gegenüber dem es umgebenden Bauteil einerseits und dem Steuerelement (7e) andererseits abgedichtet ist, weiter mit einem vorzugsweise im feststehenden Bauteil angeordneten Ringraum (18), in den die Stellhülse mit ihrer dem Gleitring (7) bzw. dem Gegenring (9) abgewandten Stirnseite vorsteht, **dadurch gekennzeichnet, dass** der Ringraum (18) über eins Zuleitung mit einem Druckmedium zur Steuerung der Stellhülse beaufschlagbar und für das Druckmedium ein eigenständiges Druckaggregat oder eine Abzweigung aus der Durchleitung des Mediums (4) vorgesehen ist.

2. Vorrichtung nach Anspruch 1, **dadurch, gekennzeichnet, dass** zur Steuerung des Anpressdrucks durch das Steuerelement im Bereich des Gleitrings (7) und/oder des Gegenrings (9) ein Temperaturfühler (7b) zur Erfassung der Lagertemperatur vorgesehen ist.

3. Vorrichtung nach einem der Ansprüche 1 oder 2, **dadurch gekennzeichnet, dass** zur Steuerung des Anpressdrucks durch das Steuerelement ein Leckagesensor vorgesehen ist.

4. Vorrichtung nach einem der Ansprüche 1 bis 3, **dadurch gekennzeichnet, dass** zur Sicherstellung einer Grundvorspannung des Steuerelements ein Federelement (20) vorgesehen ist.

## Claims

1. Device for transporting media, consisting of a stationary component and a rotating component, in particular a sealing head for conveying media (4) under pressure and at elevated temperature, comprising at least one mechanical seal, through which the medium (4) flows, between the stationary component and the rotating component, the mechanical seal being formed by a slide ring (7) and a counter-ring (9) that seals against the slide ring, further comprising a control element (7e), which is movable in the axial direction, for adjusting the axial position of the slide ring (7) and/or of the counter-ring (9), and thus the contact pressure acting between the two, as a function of the environmental and operating conditions or parameters of the device, further comprising a sleeve (12), through which the medium (4) flows and on which the control element (7e) is arranged, wherein the control element (7e) comprises an adjusting sleeve, to which the slide ring (7) or the counter-ring (9) is fixedly connected at an end face, and the sleeve (12) is sealed off from the component surrounding it on the one hand and from the control element (7e) on the other hand, further comprising an annular space (18), which is preferably arranged in the stationary component and into which the adjusting sleeve projects with its end face remote from the slide ring (7) and/or the counter-ring (9), **characterized in that** a pressure medium can be supplied to the annular space (18) via a feed line in order to control the adjusting sleeve, and a separate pressure unit is provided for the pressure medium or the latter is branched off from the medium (4) that is being conveyed.

2. Device according to claim 1, **characterized in that** a temperature sensor (7b) for detecting the bearing temperature is provided in the region of the slide ring (7) and/or the counter-ring (9) in order to control the contact pressure by means of the control element.

3. Device according to any one of claims 1 or 2, **characterized in that** a leakage sensor is provided in order to control the contact pressure by means of the control element.

4. Device according to any one of claims 1 to 3, **characterized in that** a spring element (20) is provided in order to ensure a basic biasing of the control element.

## Revendications

1. Dispositif pour le transport de fluides, composé d'un composant fixe et d'un composant rotatif, en particulier d'une tête d'étanchéité pour le passage de fluides (4) sous pression et à température élevée, présentant au moins une garniture mécanique disposée entre le composant fixe et le composant rotatif, traversée par le fluide (4) et formée par une bague de glissement (7) et une bague opposée (9) assurant l'étanchéité par rapport à celle-ci, présentant en outre un élément de commande (7e) réglable dans la direction axiale pour régler la position axiale de la bague de glissement (7) et/ou de la bague opposée (9) et ainsi la pression d'application agissant entre les deux en fonction des conditions ou des paramètres d'environnement et de fonctionnement du dispositif, présentant en outre une douille (12) traversée par le fluide (4), sur laquelle est disposé l'élément de commande (7e), l'élément de commande (7e) présentant une douille de réglage à laquelle la bague de glissement (7) ou la bague opposée (9) est raccordée de manière fixe du côté frontal et la douille (12) est rendue étanche par rapport au composant qui l'entoure d'une part et à l'élément de commande (7e) d'autre part, présentant en outre un espace annulaire (18) disposé de préférence dans le composant fixe, dans lequel la douille de réglage fait saillie par son côté frontal opposé à la bague de glissement (7) ou à la bague opposée (9),
**caractérisé en ce que**
l'espace annulaire (18) peut être exposé par une conduite d'amenée à un fluide sous pression pour la commande de la douille de réglage et qu'un groupe de pression autonome ou une dérivation de la conduite de passage du fluide (4) est prévu(e) pour le fluide sous pression.

2. Dispositif selon la revendication 1, **caractérisé en ce qu'**un capteur de température (7b) pour détecter la température de palier est prévu dans la zone de la bague de glissement (7) et/ou de la bague opposée (9) pour la commande de la pression d'application par l'élément de commande.

3. Dispositif selon l'une des revendications 1 ou 2, **caractérisé en ce qu'**un capteur de fuite est prévu pour la commande de la pression d'application par l'élément de commande.

4. Dispositif selon l'une des revendications 1 à 3, **caractérisé en ce qu'**un élément élastique (20) est prévu pour assurer une précontrainte de base de l'élément de commande.
